Europäisches Patentamt

European Patent Office

Office européen des brevets

(11) Numéro de publication: **0 268 542 B1**

## FASCICULE DE BREVET EUROPEEN

(45) Date de publication de fascicule du brevet: **01.04.92** (51) Int. Cl.⁵: **F16B 12/24**, F16B 12/46

(21) Numéro de dépôt: **87450020.0**

(22) Date de dépôt: **13.10.87**

Jointe à la demande no. 87906824.5/0332621
(numéro de dépôt/numéro de publication de la
demande européenne) par décision du 18.12.89.

(54) **Système d'assemblage montable, démontable et autobloquant d'élément de structure.**

(30) Priorité: **15.10.86 FR 8614401**

(43) Date de publication de la demande:
**25.05.88 Bulletin 88/21**

(45) Mention de la délivrance du brevet:
**01.04.92 Bulletin 92/14**

(84) Etats contractants désignés:
**AT BE CH DE ES FR GB GR IT LI LU NL SE**

(56) Documents cités:
**DE-A- 806 572
DE-A- 3 411 598
DE-C- 918 110
FR-A- 2 120 424
US-A- 1 813 072**

(73) Titulaire: **Charron, Robert
63, rue Beauducheu
F-33800 Bordeaux(FR)**

(72) Inventeur: **Charron, Robert
63, rue Beauducheu
F-33800 Bordeaux(FR)**

(74) Mandataire: **Portal, Gérard et al
Cabinet Beau de Loménie 55, rue d'Amsterdam
F-75008 Paris(FR)**

Rank Xerox (UK) Business Services

## Description

La présente invention a pour objet un système d'assemblage montable, démontable, et autobloquant d'éléments de structure.

L'invention trouve notamment application pour la réalisation de structures comportant des éléments en forme de planches, panneaux, montants, ou barres ou analogues, en bois, plastique ou métal. Le système d'assemblage conforme à l'invention, est plus particulièrement destiné à la réalisation de meubles tels que lits, chaises, tables, armoires ou étagères.

Les éléments de structure destinés à la réalisation des meubles sont généralement spécifiquement conformés pour être assemblés par emboîtage, en ne laissant apparaître, après assemblage, aucune pièce susceptible de nuire à l'esthétique.

Lorsque les pièces sont seulement emboîtées les unes dans les autres, la rigidité d'ensemble est généralement médiocre. C'est pourquoi, après assemblage, il est nécessaire de faire appel à des moyens de blocage tels que par exemple colle, clous, chevilles, agraffes, rivets, vis, etc.

Cependant, de tels moyens de blocage rendent plus complexe le montage et le démontage des meubles, et provoquent généralement des détériorations des éléments de structure lors du démontage.

Le document DE-C-918 110 révèle un système d'assemblage de trois éléments de structure, dont l'un d'entre eux comporte deux mortaises se croisant sensiblement à angle droit. Cependant, les pièces sont seulement emboîtées les unes dans les autres, de sorte que ce système n'est pas autobloquant.

Par ailleurs, le document DE-3 411 598 révèle un système d'assemblage autobloquant comportant une pièce formant clavette destinée à assurer le blocage.

Cependant, l'assemblage ainsi obtenu n'est pas du même type que celui faisant l'objet de l'invention.

La présente invention a pour but de résoudre les inconvénients précités en proposant un système d'assemblage montable et démontable autobloquant d'éléments de structure destinés notamment à la réalisation de meubles, d'une conception simple et peu coûteuse, permettant un montage et démontage rapide, aisé, ne nécessitant aucun accessoire ou outillage particulier, qui ne provoque aucune détérioration des éléments de structure, et pouvant être utilisé pour la réalisation d'agencements variés.

La solution, conforme à la présente invention, pour résoudre ce problème technique consiste en un système d'assemblage montable, démontable et autobloquant d'éléments de structure destinés notamment à la réalisation de meubles, comprenant :

- un premier élément pourvu d'une partie formant tenon comportant un logement, de préférence une rainure transversale ;
- un second élément pourvu d'une première mortaise destinée à recevoir avec un jeu latéral (e) la partie formant tenon dudit premier élément, et d'au moins une seconde mortaise , croisant ladite première mortaise, de façon qu'à l'état monté, ledit logement se trouve en face de l'ouverture de la seconde mortaise dans la première mortaise ;
- un troisième élément pourvu d'une partie formant tenon , adaptée pour être logée, de préférence de façon serrée, dans ladite seconde mortaise et comportant un organe de liaison, de préférence une languette destinée à pénétrer en position d'assemblage, dans le logement du premier élément en interdisant ainsi le retrait du premier élément de la première mortaise , et en maintenant entre les parties en vis-à-vis desdits premier et troisième éléments, un écartement ;

ledit organe de liaison étant pourvu d'au moins une fente située dans ledit écartement situé entre le premier et le troisième élément, et orientée parallèlement à la direction d'emmanchement du premier élément dans le deuxième élément ; et un moyen formant clavette destiné à être inséré dans la première mortaise le long du tenon du premier élément, et à pénétrer dans ladite fente pour bloquer ainsi en position d'assemblage, lesdits premier, second et troisième éléments.

Avantageusement, la languette précitée présente une longueur sensiblement égale à la longueur de la rainure de la partie formant tenon du premier élément, et une largeur sensiblement égale à la profondeur de ladite rainure, augmentée de l'épaisseur de la clavette précitée. Cette conformation permet un blocage parfait des éléments assemblés.

Selon une caractéristique particulière de l'invention, la languette précitée présente deux fentes latérales, ménagées à sa base, et la clavette comporte une partie sensiblement plane généralement en forme de U, dont les parties formant branches sont conformées pour être insérées, de préférence de façon serrée, dans ledites fentes latérales, en position d'assemblage.

Avantageusement, la clavette comporte une partie formant moyen de préhension, destinée à favoriser son insertion dans la languette précitée, et son extraction de celle-ci.

Selon une caractéristique avantageuse, la clavette est conformée pour accomplir, en position de blocage, une fonction supplémentaire, notamment pour servir de moyen de support, par exemple comme taquet d'étagère.

L'invention sera mieux comprise, et d'autres buts, caractéristiques et avantages de celle-ci apparaîtront plus clairement à la lecture de la description explicative qui va suivre, faite en référence aux dessins schématiques annexés donnés uniquement à titre d'exemples non limitatifs illustrant un mode de réalisation actuellement préféré de l'invention, et dans lesquels :

- La figure 1 est une vue en perpective éclatée des éléments constituant un système d'assemblage conforme à la présente invention ;
- La figure 2 est une vue en coupe suivant le plan II-II du système représenté à la figure 1, après assemblage et blocage ;
- La figure 3 est une vue semblable à la figure 2, d'un assemblage de quatre éléments utilisant le système conforme à l'invention ;
- La figure 4 est une vue en perspective d'une clavette formant support d'étagère ;
- La figure 5 est une vue en perspective d'une variante de réalisation de la clavette représentée à la figure 4 ; et
- La figure 6 est une vue en perspective d'une variante de réalisation du premier élément formant tenon, dans le cas où l'on souhaite assembler seulement deux éléments.

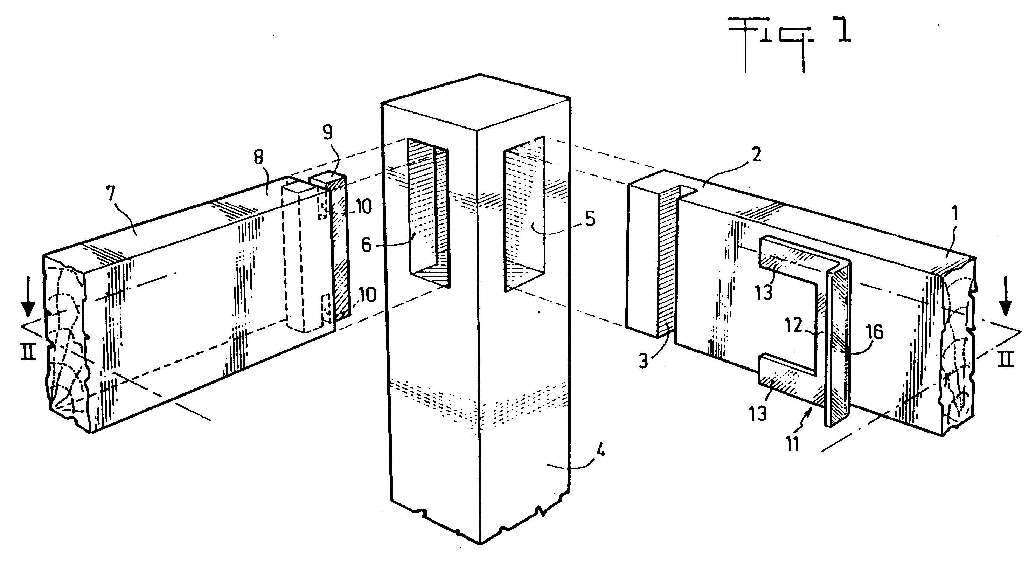

On a représenté à la figure 1 le mode de réalisation actuellement préféré du système d'assemblage selon l'invention. Ce système permet la réalisation de structures comportant au moins deux éléments à assembler, en forme de planches, panneaux, montants ou analogues.

Plus précisément, la figure 1 montre l'assemblage de deux traverses sur un montant, mais les éléments représentés doivent être considérés comme pouvant appartenir à des éléments de structure plus complexes tels que par exemple des panneaux.

Le concept d'assemblage selon l'invention fait appel, à une combinaison nouvelle de quatre éléments qui seront étudiés en détail ci-après.

Le premier élément 1 qui peut être par exemple une barre, une planche ou un panneau est pourvu d'une partie formant tenon 2, de section transversale sensiblement rectangulaire, comportant sur une de ses faces latérales une rainure transversale 3 s'étendant de préférence sur toute sa largeur.

Le second élément 4 qui sera généralement un montant, comme dans l'exemple représenté, est pourvu d'une première mortaise 5 parrallélépipédique, conformée pour recevoir, avec un jeu latéral e, la partie formant tenon 2 de l'élément 1.

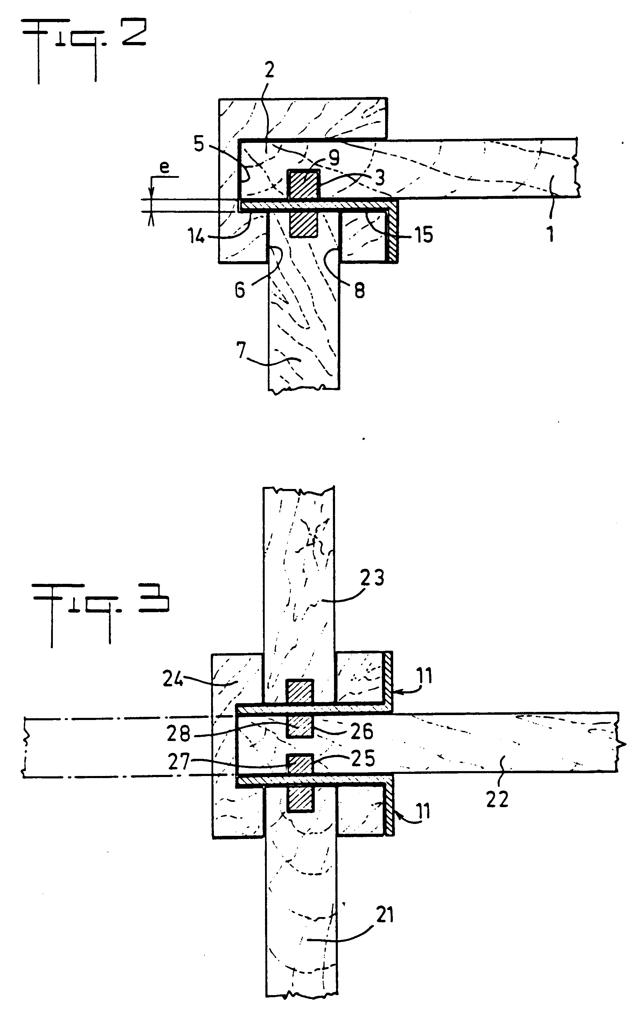

Comme le montre la figure 2, le second élément 4 est pourvu d'une seconde mortaise 6 généralement parallélépipédique croisant à angle droit la première mortaise 5, en définissant avec celle-ci un espace commun logeant en position d'assemblage la partie formant tenon 2 du premier élément 1, au niveau de la rainure transversale 3.

Le troisième élément 7, qui peut être par exemple une barre, une planche ou un panneau est pourvu d'une partie formant tenon 8, de section transversale rectangulaire adaptée pour être logée de façon serrée dans la seconde mortaise 6.

La partie 8 est pourvue en son extrémité d'une languette 9 destinée à être insérée, en position d'assemblage, dans la rainure transversale 3, en maintenant cependant entre les parties en vis-à-vis des éléments 1 et 7 un écartement sensiblement égal au jeu latéral e. Avantageusement, la languette 9 présente une longueur sensiblement égale à la longueur de la rainure 3, et sa largeur est sensiblement égale à la profondeur de cette rainure, augmentée du jeu latéral e, qui correpond sensiblement, comme on verra, à l'épaisseur de la partie de blocage de l'élément formant clavette 11.

La languette 9 sera de préférence constituée par une pièce rapportée, métallique ou en plastique rigide, et fixée par tout moyen approprié sur la partie formant tenon 8 de l'élément 7.

Par ailleurs, la languette 9 est pourvue à sa base, c'est-à-dire au niveau de l'espace séparant les éléments 2 et 6, d'au moins une fente 10 dans laquelle viendra s'insérer l'élément de blocage formant clavette 11.

Dans l'exemple représenté, la languette 9 est pourvue de deux fentes latérales 10 qui assurent un blocage efficace par coopération avec la clavette 11.

L'élément formant clavette 11 est conformé de façon à pouvoir être inséré dans la ou les fentes 10 de la languette 9, en le faisant glisser le long de la face portant la rainure, de la partie formant tenon 2 de l'élément 1. Pour celà, la clavette 11 comporte une partie sensiblement plane 12, en forme de U dans l'exemple représenté, dont les parties formant branches 13 sont conformées pour être insérées de façon serrée, en position d'assemblage dans les fentes latérales 10 précitées. (Voir figure 2).

Comme on le comprend, les dimensions de la partie 12 de la clavette 11 sont déterminées par le jeu latéral e, ainsi que par la profondeur de la première mortaise 5.

Avantageusement, la profondeur de a mortaise 5 est choisie pour définir de part et d'autre de la partie formant tenon 8 du second élément 7 deux faces d'appui latérales 14, 15, de la partie 12 de la clavette 11.

Par ailleurs, afin de faciliter son insertion dans les fentes 10 de la languette 9, ainsi que son extraction de ces fentes, la clavette 11 comporte une partie formant moyen de préhension 16, comme par exemple un rebord plan s'étendant sensiblement transversalement à la partie 12 en forme de U.

Par ailleurs, selon une caractéristique particulièrement avantageuse de l'invention, la clavette 11 peut être conformée pour accomplir, en position de blocage, une fonction supplémentaire, notamment pour servir de moyen de support.

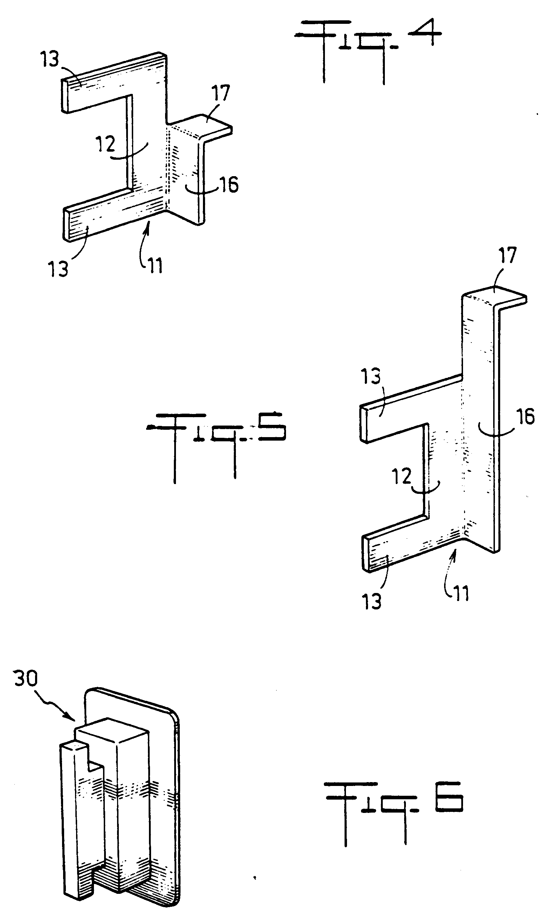

On a représenté aux figures 4 et 5 deux modes de réalisation possibles de la clavette 11. Celle-ci comporte une partie 17 formant moyen de support, s'étendant sensiblement transversalement au rebord 11 précité, soit au niveau de la partie 12 en U (Figure 4), soit extérieurement, et de préférence au-dessus de cette partie 12 (Figure 5). La clavette représentée à la figure 4 servira en particulier de support d'étagère ; celle représentée à la figure 5 peut être utilisée par exemple pour fixer un plateau sur un meuble.

La clavette 11 sera réalisée de préférence en métal, ou en plastique rigide. Ses dimensions, et en particulier son épaisseur seront déterminées en fonction de la résistance des matériaux employés pour sa réalisation.

Comme on le comprend, les mortaises 5 et 6 peuvent être borgnes ou non et se croiser sur tout ou partie de leur longueur.

Le système d'assemblage selon la présente invention présente de multiples possibilités.

On a représenté par exemple à la figure 3 un assemblage en forme de T, comportant trois éléments formant traverses 21, 22, 23 et un élément formant montant 24. Les éléments formant traverses 21 et 23 sont identiques à l'élément 7 de la figure 1 ; l'élément formant traverse 22 est semblable à l'élément 1 de la figure 1, mais comporte deux rainures transversales opposées 25, 26, destinées à recevoir respectivement les parties formant languettes 27, 28 des éléments 2 et 23 ; l'élément formant montant 24 est semblable à l'élément 4 de la figure 1, mais est traversé de part en part par sa seconde mortaise. Le blocage de cet assemblage sera réalisé à l'aide de deux moyens formant clavette (11), tels que décrits précédemment.

De même, la première mortaise de l'élément formant montant 24 peut traverser celui-ci de part en part et permettre un assemblage en croix (ligne brisée).

L'invention peut être également utilisée dans le cas où l'on souhaite assembler simplement deux éléments, comme par exemple une traverse et un montant respectivement semblables aux éléments 1 et 4 de la figure 1. Dans ce cas, le second élément formant tenon (semblable à l'élément 7 de la figure 1) sera réalisé sous la forme d'un "bouchon" (30) conformé aux dimensions exactes de la seconde mortaise 6. On a représenté à la figure 6 un tel élément formant bouchon.

La mise en oeuvre des différents éléments d'assemblage conforme à l'invention se déduit aisément de leur structure, qui vient d'être décrite. On notera simplement que l'ordre de montage préférentiel est le suivant :

On insère la partie formant tenon 2 de l'élément 1 dans la mortaise 5 de l'élément formant montant 4, puis on insère la partie formant tenon 8 de l'élément 7 dans la mortaise 6 en positionnant la languette 9 dans la rainure 3, puis on bloque l'assemblage ainsi réalisé en insérant la pièce formant clavette 11 dans les fentes 10 de la languette 9.

Avantageusement, les mortaises 5 et 6 seront réalisées de telle façon que les parties formant tenon 2 et 8 puissent être insérées indifféremment dans la mortaise 5 ou dans la mortaise 6.

Ces mortaises seront par exemple de même largeur, la largeur de la partie formant tenon 8 étant alors choisie égale à la largeur de la partie formant tenon 2, augmentée de l'épaisseur de la partie 12 de la clavette 11.

De nombreuses modifications peuvent être apportées au système d'assemblage qui vient d'être décrit, sans sortir du cadre de l'invention. Ainsi, l'homme de métier pourra choisir d'autres formes de réalisation des différents éléments décrits, permettant par exemple un assemblage avec des positions angulaires relatives quelconques, entre éléments.

Les avantages du système d'assemblage selon l'invention sont nombreux :

- Montage et démontage aisés, ne nécessitant ni outillage particulier, ni personnel specialisé ;
- Respect de l'esthététique de la structure réalisée ;
- Possibilité de remplacer aisément un élément, pour modifier ou moduler éventuellement la structure ;
- Stockage peu encombrant des éléments à assembler, d'où une facilité de transport et de livraison.

Comme on l'aura compris, les domaines d'application de l'invention sont nombreux. On citera par exemple l'industrie du meuble et la construction (charpentes, clôtures, échaffaudages, abris temporaires).

**Revendications**

1. Système d'assemblage montable, démontable et autobloquant d'éléments de structure destinés notamment à la réalisation de meubles, comprenant :
   - un premier élément (1) pourvu d'une partie formant tenon (2) comportant un logement, de préférence une rainure transversale (3);
   - un second élément (4) pourvu d'une première mortaise (5) destinée à recevoir avec un jeu latéral (e) la partie formant tenon (2) dudit premier élément, et d'au moins une seconde mortaise (6), croisant ladite première mortaise, de façon qu'à l'état monté, ledit logement (3) se trouve en face de l'ouverture de la seconde mortaise dans la première mortaise ;
- un troisième élément (7) pourvu d'une partie formant tenon (8), adaptée pour être logée, de préférence de façon serrée, dans ladite seconde mortaise (6) et comportant un organe de liaison, de préférence une languette (9) destinée à pénétrer en position d'assemblage, dans le logement (3) du premier élément en interdisant ainsi le retrait du premier élément (1) de la première mortaise (5), et en maintenant entre les parties en vis-à-vis desdits premier et troisième éléments, un écartement ;

ledit organe de liaison (9) étant pourvu d'au moins une fente (10) située dans ledit écartement situé entre le premier et le troisième élément, et orientée parallèlement à la direction d'emmanchement du premier élément dans le deuxième élément ; et un moyen formant clavette (11) destiné à être inséré dans la première mortaise (5) le long du tenon (2) du premier élément, et à pénétrer dans ladite fente (10) pour bloquer ainsi en position d'assemblage, lesdits premier, second et troisième éléments.

**2.** Système selon la revendication 1, caractérisé en ce que la languette (9) précitée présente une longueur sensiblement égale à la longueur de la rainure (3) de la partie formant tenon (2) du premier élément (1), et une largeur sensiblement égale à la profondeur de ladite rainure, augmentée de l'épaisseur de la clavette précitée.

**3.** Système selon la revendication 1 ou 2, caractérisé en ce que la languette (9) précitée présente deux fentes latérales (10) ménagées à sa base, et en ce que la clavette (11) précitée comporte une partie sensiblement plane (12) en forme de U, dont les parties formant branches (13) sont conformées pour être insérées, de préférence de façon serrée, en position d'assemblage dans lesdites fentes latérales (10).

**4.** Système selon l'une des revendications précédentes, caractérisé en ce que la clavette (11) précitée comporte une partie formant moyen de préhension (16), destinée à favoriser son insertion dans la languette (9) précitée et son extraction de celle-ci.

**5.** Système selon l'une des revendications 1 à 4, caractérisé en ce que la clavette (11) est conformée pour accomplir, en position de blocage, une fonction supplémentaire, notamment pour servir de moyen de support, par exemple de taquet d'étagère.

**6.** Système selon la revendication 4, caractérisé en ce que la clavette (11) précitée comporte un rebord plan s'étendant sensiblement transversalement à la partie plane (12) et formant moyen de préhension précité.

**7.** Système selon l'une des revendications précédentes, caractérisé en ce que la languette (9) et l'élément formant clavette (11) précitées sont réalisés en métal ou en plastique rigide.

**Claims**

**1.** An assembly system of structural elements, which can be mounted, dismantled and is self-locking, intended, in particular for the making of furniture, including:
- a first element (1) provided with a part forming a tenon (2) comprising a recess, preferably a transverse groove (3);
- a second element (4) provided with a first mortice (5) intended to receive the part forming the tenon (2) of the said first element with lateral play (e), and at least one second mortice (6) intersecting the said first mortice so that in the assembled state, the said recess (3) should be opposite the opening of the second mortice in the first mortice;
- a third element (7) provided with a part forming a tenon (8) adapted so as to be accommodated, preferably tightly, in the said second mortice (6) and comprising a connecting element, preferably a tongue (9) intended to penetrate in the assembled position into the recess (3) of the first element thus preventing the withdrawal of the first element (1) from the first mortice (5) and maintaining a spacing between the part opposite the said first and third elements;
- the said connecting element (9) being provided with at least one slot (10) situated within the said spacing between the first and third elements, and orientated parallel to the direction of fitting the first element in the second element; and a means forming a key (11) intended to be inserted in the first mortice (5) along the tenon (2) of the first element, and to penetrate into the said slot (10) so as to thus lock the said first, second and third elements in the assembled position.

2. A system according to claim 1, characterized in that the above mentioned tongue (9) has a length substantially equal to the length of the groove (3) of the part forming the tenon (2) of the first element (1) and a width substantially equal to the depth of the said groove increased by the width of the above mentioned key.

3. A system according to claim 1 or 2, characterized in that the above mentioned tongue (9) has two lateral slots (10) arranged at its base, and in that the above mentioned key (11) comprises a substantially flat channel-shaped part (12) whose portions forming the sides (13) are shaped so as to be capable of insertion, preferably in a tight manner, inside the said lateral slots (10) in the assembled position.

4. A system according to one of the preceding claims, characterized in that the above mentioned key (11) includes a part forming a gripping means (18) intended to facilitate its insertion in the above mentioned tongue (9) and its extraction therefrom.

5. A system according to one of claims 1 to 4, characterized in that the key (11) is shaped so as to fulfil an additional function in the locked position, in particular so as to serve as a support means, for example, as a shelf support.

6. A system according to claim 4, characterized in that the above mentioned key (11) includes a flat raised edge extending substantially transversely to the flat portion (12) and forming the above mentioned gripping means.

7. A system according to one of the preceding claims characterized in that the above mentioned tongue (9) and the element forming the key (11) are made of metal or a rigid plastic material.

**Patentansprüche**

1. Zusammensetzbares und zerlegbares sowie selbsthemmendes Montagesystem für insbesondere zur Herstellung von Möbeln bestimmte Bauelemente, umfassend:

- ein erstes Element (1), das mit einem einen Zapfen (2) bildenden Teil versehen ist, welcher eine Aufnahme, vorzugsweise eine Quernut (3), aufweist;
- ein zweites Element (4), das mit einem ersten Zapfenloch (5) zur Aufnahme des den Zapfen (2) bildenden Teils des ersten Elements mit einem seitlichen Spiel (e) bestimmt und mit mindestens einem zweiten Zapfenloch (6) versehen ist, welches das erste Zapfenloch kreuzt, sodaß sich die Aufnahme (3) im zusammengesetzten Zustand im ersten Zapfenloch gegenüber der Öffnung des zweiten Zapfenlochs befindet; - ein drittes Element (7), das mit einem einen Zapfen (8) bildenden Teil versehen ist, der zur Aufnahme im zweiten Zapfenloch (6) auf vorzugsweise festgeklemmte Weise ausgelegt ist und ein Verbindungsorgan, vorzugsweise eine Feder (9), zum Eindringen in die Aufnahme (3) des ersten Elements in der Montageposition umfaßt, wodurch ein Rückzug des ersten Elements (1) aus dem ersten Zapfenloch (5) verhindert wird und wobei zwischen den zueinanderschauenden Teilen des ersten und dritten Elements ein Abstand aufrechtgehalten ist; welches Verbindungsorgan (9) mit mindestens einem Schlitz (10) versehen ist, der in dem zwischen dem ersten und dem dritten Element befindlichen Abstand liegt und parallel zur Einsteckrichtung des ersten Elements im zweiten Element gerichtet ist; und ein einen Keil (11) bildendes Element zum Einsetzen in das erste Zapfenloch (5) entlang des Zapfens (2) des ersten Elements und zum Eindringen in den Schlitz (10), um so das erste, das zweite und das dritte Element in der Montageposition zu blokkieren.

2. System nach Anspruch 1, dadurch gekennzeichnet, daß die Feder (9) eine Länge aufweist, die im wesentlichen gleich der Länge der Nut (3) des den Zapfen (2) bildenden Teils des ersten Elements (1) ist, und eine Breite aufweist, die im wesentlichen gleich der Tiefe der Nut, erhöht um die Dicke des Keiles, ist.

3. System nach Anspruch 1 oder 2, dadurch gekennzeichnet, daß die Feder (9) zwei in ihrer Basis eingearbeitete seitliche Schlitze (10) aufweist, und daß der Keil (11) einen im wesentlichen planen Teil (12) in U-Form aufweist, dessen Schenkel (13) bildende Teile so gestaltet sind, daß sie in der Montageposition auf vorzugsweise festgeklemmte Weise in den seitlichen Schlitzen (10) eingesetzt sind.

4. System nach einem der vorhergehenden Ansprüche, dadurch gekennzeichnet, daß der Keil (11) einen ein Greifmittel (16) bildenden Teil zur Erleichterung des Einschiebens desselben in die Feder (9) und Herausziehens aus derselben umfaßt.

5. System nach einem der Ansprüche 1 bis 4, dadurch gekennzeichnet, daß der Keil (11) so gestaltet ist, daß er in der Blockierposition eine zusätzliche Funktion ausübt, insbesondere als Stützmittel, z.B. als Regalträger, fungiert.

6. System nach Anspruch 4, dadurch gekennzeichnet, daß der Keil (11) einen planen Bord umfaßt, der sich im wesentlichen quer zum planen Teil (12) erstreckt und das Greifmittel bildet.

7. System nach einem der vorhergehenden Ansprüche, dadurch gekennzeichnet, daß die Feder (9) und das den Keil (11) bildende Element aus Metall oder aus starrem Kunststoff sind.

Fig. 1

Fig. 2

Fig. 3

Fig. 4

Fig. 5

Fig. 6